# EUROPÄISCHE PATENTSCHRIFT

(11) **EP 4 124 440 B1**
(45) Veröffentlichungstag und Bekanntmachung des Hinweises auf die Patenterteilung: **25.09.2024**
(21) Anmeldenummer: 22181287.8
(22) Anmeldetag: 27.06.2022
(51) Int. Cl.: B29C 48/32, B29C 48/25, B29C 49/04, B29C 48/325, B29C 49/28, B29C 48/09, B29C 48/00

(54) **DÜSENWERKZEUGSYSTEM UND EXTRUSIONSBLASANORDNUNG**
NOZZLE TOOL SYSTEM AND EXTRUSION BLOWER
SYSTÈME D'OUTIL À FILIÈRE ET DISPOSITIF D'EXTRUSION-SOUFFLAGE

(30) Priorität: 27.07.2021 DE 102021119460
(43) Veröffentlichungstag der Anmeldung: 01.02.2023
(73) Patentinhaber: Feuerherm, Max, 53840 Troisdorf (DE)
(72) Erfinder: Feuerherm, Max, 53840 Troisdorf (DE); Kappen, Günther, 53721 Siegburg (DE); Gruschka-Feuerherm, Tobias, 53840 Troisdorf (DE); Kappen-Feuerherm, Rolf, 53840 Troisdorf (DE)
(74) Vertreter: Andrejewski - Honke Patent- und Rechtsanwälte Partnerschaft mbB

(56) Entgegenhaltungen:
- EP-A1- 1 004 423
- EP-A2- 1 023 984
- EP-B1- 0 429 862
- EP-B1- 1 060 067
- DE-A1- 102012 111 117
- DE-A1- 3 639 273
- US-A1- 2005 276 876
- US-A1- 2015 064 302
- US-A1- 2019 134 874

## Beschreibung

Die Erfindung betrifft ein Düsenwerkzeugsystem zum Extrusionsblasformen insbesondere von Kunststoffbehältern mit einem Zwischenmodul und zumindest einer ersten Düsenaustrittseinheit und einer zweiten Düsenaustrittseinheit, welche jeweils zwischen einem sich in einer axialen Richtung erstreckenden Dorn und einer deformierbaren Hülse einen verstellbaren Düsenaustrittsspalt ausbilden, welche im Austausch zueinander an dem Zwischenmodul anschließbar sind und welche einen zueinander unterschiedlichen ersten Austrittsdurchmesser und einen größeren zweiten Austrittsdurchmesser aufweisen, wobei zumindest ein Stellantrieb für eine reversible Verformung der Hülse an dem Zwischenmodul angeordnet ist und über eine lösbare Koppelanordnung an die deformierbare Hülse anschließbar ist.

Das Zwischenmodul ist für den Anschluss an einen Extrusionskopf einer Blassanordnung eingerichtet, welche ebenfalls Gegenstand der Erfindung ist.

Extrusionsblasanordnungen werden zum Beispiel in EP1004423A1, EP1023984B1, US2015/064302A1, US2005/276876A1, DE3639273A1, EP1060 67B1, EP0429862B1, DE102012111117A1 und US2019/134874A1 offenbart.

Die vorliegende Erfindung geht von einer Extrusionsblasanordnung aus, die in der gattungsgemäßen EP 1 023 984 B1 beschrieben ist.

Mit der Extrusionsblasanordnung können aus einer thermoplastischen Kunststoffschmelze bestehende schlauchförmige Vorformlinge gebildet werden, welche zu einem Kunststoffbehälter aufgeweitet werden. Die Ausformung erfolgt in einer Blasform der Extrusionsblasanordnung.

Bei dem Blasformprozess wird der Vorformling entsprechend der Blasform aufgeweitet und ausgedünnt. Um für die gefertigten Behälter eine gleichmäßige Wandstärke zu erreichen oder gezielt beispielsweise an stärker belasteten Abschnitten eine größere Wanddicke bereitzustellen und somit insgesamt optimale Eigenschaften zu erreichen, ist es bekannt, bereits den schlauchförmigen Vorformling entsprechend mit einer sich ändernden Wanddicke zu bilden. Hierzu ist eine Verstellung der Düsenaustrittsspaltbreite durch eine axiale Relativbewegung zwischen dem Dorn und der deformierbaren Hülse vorgesehen, wozu der Dorn und/oder die deformierbare Hülse axial bewegt werden. Die Steuerung erfolgt dabei über ein Wanddickenstellprogramm, wobei zusätzlich zur Beeinflussung der radialen Wanddickenverteilung (d. h. um den Umfang) die deformierbare Hülse eingesetzt wird, welche mit zumindest einem Stellantrieb beaufschlagt ist. Eine axiale Bewegung der deformierbaren Hülse erfolgt üblicherweise mit weiteren die deformierbare Hülse aufnehmenden bzw. tragenden Komponenten.

Die Hülse ist vorzugsweise elastisch deformierbar, sodass freie Abschnitte zwischen Kraftangriffspunkten bei einer Verformung der deformierbaren Hülse an den Kraftangriffspunkten einer aufgrund der Elastizität vorgegebenen, reproduzierbaren Verschiebung unterworfen sind.

Entsprechende Verformungen werden im Rahmen der Erfindung durch zumindest einen Stellantrieb erzeugt.

Bei einer Einleitung der Stellbewegung in zwei üblicherweise einander gegenüberliegende Kraftangriffspunkte oder bei einer ortsfesten Abstützung an einem Kraftangriffspunkt kann für eine reversible elastische Verformung der Hülse ein einziger Stellantrieb vorgesehen sein. Vorzugsweise sind jedoch zumindest zwei Stellantriebe vorgesehen, die auf einander gegenüberliegende Kraftangriffspunkte wirken und somit die Hülse aus einer üblicherweise kreisförmigen Ruhelage durch eine drückende oder ziehende Bewegung verformen können.

Sofern lediglich ein Stellantrieb vorgesehen ist, welcher auf einander gegenüberliegende Kraftangriffspunkte wirkt, kann für die Übertragung der Stellbewegung ein geeignetes mechanisches Getriebe vorgesehen sein, welches beispielsweise eine Kniehebelanordnung umfasst.

Durch die beschriebenen Maßnahmen kann zur Optimierung der radialen Wanddickenverteilung im Hinblick auf den zu formenden Kunststoffbehälter der Düsenaustrittsspalt in eine langgezogene oder gestauchte ovale Form überführt werden. Die Verlagerung der Kunststoffschmelze entlang der Verbindungslinie der beiden Kraftangriffspunkte ist dagegen durch eine gleichgerichtete Bewegung von zwei einander gegenüberliegenden Stellantrieben möglich, wobei nach den jeweiligen Anforderungen die verschiedenen gleichgerichteten oder entgegengesetzten Bewegungskomponenten frei kombiniert werden können.

Für eine weiterreichende Einstellung der Düsenaustrittsspaltbreite um den Umfang können grundsätzlich auch mehr als zwei relative Stellantriebe vorgesehen sein, wobei beispielsweise vier Stellantriebe in einer Winkelteilung von 90° angeordnet werden können.

Durch die beschriebene Wanddickensteuerung ist es nicht nur möglich, bei dem schlauchförmigen Vorformling eine geeignete Wanddickenverteilung einzustellen. Des Weiteren ist auch in einem gewissen Maße durch die Modifikation der entsprechenden Steuerung eine Anpassung an unterschiedliche Formen und gegebenenfalls auch Größen von Blasformteilen möglich.

Sollen jedoch zwei Blasteile mit signifikant unterschiedlichen Querschnittsmaßen auf der Extrusionsblasanordnung gefertigt werden, so sind für einen ressourcenschonenden Blasformprozess zwei unterschiedliche Düsenwerkzeuge mit unterschiedlichen Austrittsdurchmesser erforderlich, die entsprechend ihrer Verwendung in die Extrusionsblasanordnung eingebaut, in Betrieb genommen und für die Produktion eingestellt bzw. optimiert werden müssen.

In diesem Zusammenhang wird gemäß der EP 1 023 984 B1 eine mehrteilige Ausgestaltung vorgeschlagen, wobei ein Düsenoberteil als Zwischenmodul an dem Extrusionskopf verbleibt und wobei zur Bereitstellung eines ersten Austrittsdurchmessers und eines größeren zweiten Austrittsdurchmessers entsprechend eine erste Düsenaustrittseinheit und eine zweite Düsenaustritteinheit vorgesehen sind, welche jeweils eine reversible deformierbare Hülse sowie einen zugeordneten Dorn aufweisen.

Die Stellantriebe sind dann an dem Düsenoberteil als Zwischenmodul angeordnet, sodass auch die Stellantriebe zusammen mit dem Zwischenmodul am Extrusionskopf verbleiben können.

Gemäß der Fig. 3 und 11 der EP 1 023 984 B1 kann ausgehend von der dargestellten Konfiguration ein größerer zweiter Austrittsdurchmesser durch eine Verlängerung des Dorns und der deformierbaren Hülse entlang der Axialrichtung erreicht werden. Bei einem entsprechenden Umbau sind umfangreiche Einrichtungsmaßnahmen nicht zu vermeiden.

Vor diesem Hintergrund liegt der vorliegenden Erfindung die Aufgabe zugrunde, die Bereitstellung unterschiedlicher Austrittsdurchmesser schneller, einfacher und zuverlässiger zu ermöglichen.

Gegenstand der Erfindung und Lösung der Aufgabe sind Düsenwerkzeugsysteme gemäß der Patentansprüche 1, 6 und 7, wobei die jeweils kennzeichnenden Merkmale auch besonders bevorzugt in Kombination miteinander vorgesehen sind. Die Erfindung umfasst des Weiteren auch eine Extrusionsblasanordnung mit einem Extrusionskopf und dem zuvor genannten Düsenwerkzeugsystem.

Ausgehend von einem gattungsgemäßen Düsenwerkzeugsystem gemäß dem Oberbegriff des Patentanspruches 1 ist gemäß einem ersten Aspekt der Erfindung vorgesehen, dass die erste Düsenaustrittseinheit durch zumindest einen inneren mechanischen Anschlag einen ersten Stellweg des zumindest einen Stellantriebs und die zweite Düsenaustrittseinheit durch zumindest einen inneren mechanischen Anschlag einen gegenüber dem ersten Stellweg größeren zweiten Stellweg des zunächst einen Stellantriebs begrenzen.

Die inneren mechanischen Anschläge der ersten Düsenaustrittseinheit sowie der zweiten Düsenaustrittseinheit können für eine drückende Stellbewegung des zumindest einen Stellantriebes jeweils durch eine Anschlagfläche der jeweiligen Düsenaustrittseinheit gebildet sein.

Der Erfindung liegt in Bezug auf den ersten Aspekt die Erkenntnis zugrunde, dass für Düsenaustrittseinheiten mit unterschiedlichen konstruktiven Parametern und insbesondere mit einem unterschiedlichen Austrittsdurchmesser auch unterschiedliche Stellwege, d.h. auch maximale Verformungen zulässig sind.

Bei einer ansonsten gleichen oder im Wesentlichen gleichen konstruktiven Ausgestaltung kann bei dem gegenüber dem ersten Austrittsdurchmesser größeren zweiten Austrittsdurchmesser auch ein größerer zweiter Stellweg realisiert werden, ohne dass die zugeordnete deformierbare Hülse überlastet oder beschädigt wird.

Von diesem Hintergrund ist auch vorgesehen, dass durch den ersten Stellweg bzw. den zweiten Stellweg die jeweilige deformierbare Hülse bei dem Betrieb vor einer Überlastung und/oder Beschädigung geschützt ist, wobei sich durch die mechanische Begrenzung der Stellwege ein sehr großes Maß an Sicherheit ergibt. Da durch zumindest den inneren mechanischen Anschlag der jeweilige Stellweg vorgegeben ist, wird der Wechsel zwischen der ersten Düsenaustrittseinheit und der zweiten Düsenaustrittseinheit erheblich erleichtert, weil keine Anschläge aufwendig verändert, angepasst oder eingestellt werden müssen.

Vorzugsweise sind die Stellwege jeweils durch den inneren mechanischen Anschlag und einen äußeren mechanischen Anschlag begrenzt. Grundsätzlich kann der äußere mechanische Anschlag auch bei einer geeigneten konstruktiven Ausgestaltung durch die erste Düsenaustrittseinheit bzw. die zweite Düsenaustrittseinheit bereitgestellt werden.

Dagegen ist es jedoch auch möglich und im Rahmen der Erfindung bevorzugt, dass für eine ziehende Stellbewegung ein äußerer mechanischer Anschlag dem Zwischenmodul zugeordnet ist.

Je nach konstruktiver Ausgestaltung kann dabei der äußere mechanische Anschlag als eine Art Fixpunkt betrachtet werden, wobei dann durch die unterschiedliche Position des inneren mechanischen Anschlags bei der ersten Düsenaustrittseinheit und der zweiten Düsenaustrittseinheit der jeweils zulässige Stellweg festgelegt werden. Entsprechend ergibt sich für beide Stellwege dann auch eine Mittellage der deformierbaren Hülsen der ersten Düsenaustrittseinheit einerseits und der zweiten Düsenaustrittseinheit andererseits an unterschiedlichen Stellpositionen des zumindest einen Stellantriebes.

Bei der Montage erfolgt die Verbindung der deformierbaren Hülse mit dem zumindest einen Stellantrieb vorzugsweise in der Mittellage, wobei die deformierbare Hülse dann kräftefrei ist. Ausgehend von der auf den kräftefreien Zustand der deformierbaren Hülse bezogenen Mittellage können sich an den Kraftangriffspunkten für eine ziehende und eine drückende Bewegung unterschiedliche zulässige Teilstellwege ergeben, so dass dann die Mittellage nicht der Mitte des gesamten Stellweges entspricht.

Da im Rahmen der Erfindung bereits gemäß dem ersten Aspekt ein Umrüsten auf unterschiedliche Austrittsdurchmesser einfacher, schneller und zuverlässiger erfolgen kann, wird das Zwischenmodul im Rahmen der Erfindung auch als Schnellrüstaufnahme bezeichnet.

Dabei ist vorzugweise auch vorgesehen, dass die zumindest zwei unterschiedlichen Düsenaustrittseinheiten in gleicher Weise an das Zwischenmodul angeschlossen sind und insbesondere eintrittsseitig eine übereinstimmende Schnittstelle bzw. Anschlusskonstruktion für die Anbindung an das Zwischenmodul aufweisen.

Bei dem Übergang zwischen dem Zwischenmodul und den Düsenaustrittseinheiten ist eine dauerhaft sichere Abdichtung des schmelzeführenden Flusskanals bereitzustellen. Des Weiteren sollen an dem Übergang Kanten, Absätze, Stufen, Spalte oder vergleichbare Frei- und Zwischenräume sowie rheologisch ungünstige Übergange vermieden werden, welche die Fließeigenschaften der Kunststoffschmelze beeinträchtigen können.

Wie bereits zuvor im Zusammenhang mit dem Stand der Technik erläutert, sind gemäß einer bevorzugten Ausgestaltung der Erfindung zwei einander gegenüberliegende Stellantriebe vorgesehen, welche beide in der beschriebenen Weise dem Zwischenmodul zugeordnet sind. Wie auch nachfolgend noch weiter beschrieben, kann der zumindest eine Stellantrieb fest an dem Zwischenmodul oder gegenüber einem Grundkörper des Zwischenmoduls beweglich sein.

Hinsichtlich des ersten Aspekts der Erfindung ist ausschlaggebend, dass bei einem Austausch die erste Düsenaustrittseinheit und die zweite Düsenaustrittseinheit mit dem gleichen Stellantrieb bzw. den gleichen Stellantrieben verbunden werden, wobei eine manuelle Anpassung des Stellweges und insbesondere des zulässigen Stellweges nicht notwendig ist.

Für jedes als Blasformteil zu fertigendes Produkt ist ein geeignetes Wanddickenstellprogramm vorzusehen, wobei beispielsweise bei einer Ausgestaltung mit zwei Stellantrieben diese unabhängig voneinander jeweils von einer zugeordneten Programmkurve angesteuert werden. In Abhängigkeit von den Programmkurven können die Stellantriebe während der Extrusion eines Vorformlings gleiche oder unterschiedliche Stellhübe ausführen. Die Ansteuerung der Stellantriebe kann beispielsweise über einen servohydraulischen oder auch einen servo-elektrischen Antrieb erfolgen.

Optional oder vorzugsweise zusätzlich zu dem zuvor beschriebenen ersten Aspekt ist ausgehend von dem Oberbegriff des Patentanspruches 1 gemäß einem zweiten Aspekt vorgesehen, dass die erste Düsenaustrittseinheit und die zweiten Düsenaustrittseinheit sich bezogen auf den jeweiligen Düsenaustrittsspalt entlang der Axialrichtung über die gleiche Höhe erstrecken.

Dabei ist zu beachten, dass eine ersten Teilhöhe zwischen einer Anschlussebene des Zwischenmodul und der Düsenaustrittseinheiten einerseits und die Position des zumindest einen Stellantriebes andererseits vorgegeben ist. Eine zweite Teilhöhe bezieht sich dann auf den Abstand des zumindest einen Stellantriebes entlang der Axialrichtung bis zu dem jeweiligen Düsenaustrittsspalt.

Für verschiedene Konstruktionen kann dadurch die technische Auslegung des Düsenwerkzeugsystems selbst oder auch damit zusammenwirkender Komponenten vereinfacht werden.

In diesem Zusammenhang ist zu beachten, dass die deformierbare Hülse gemäß einer möglichen Ausführungsform an einem in Richtung des Extrusionskopfes weisenden Ende gelagert ist, während die Kraftangriffspunkte für die Deformationsbewegung der deformierbaren Hülse bezogen auf die Axialrichtung zweckmäßigerweise nahe des Düsenaustrittsspaltes angeordnet sind.

Dadurch kann erreicht werden, dass die tatsächliche Verstellung an dem jeweiligen Düsenaustrittsspalt an den Kraftangriffspunkten in etwa dem Hub des dort jeweils wirkenden Stellantriebes entspricht. Da - wie beschrieben -die ersten Teilhöhe festgelegt ist, würde sich bei einer unterschiedlichen Höhe von erster Düsenaustrittseinheit und zweiter Düsenaustrittseinheit entlang der Axialrichtung der Abstand zwischen den Kraftangriffspunkten und dem Düsenaustrittsspalt verändern, sodass je nach Geometrie aufwendige Korrekturen notwendig sein können, um aus dem Hub des zumindest einen Stellantriebes die Bewegung an dem Düsenaustrittsspalt selbst ermitteln zu können.

Auch wenn die Kraftangriffspunkte nahe des Düsenaustrittsspaltes angeordnet sind, entspricht der Hub des an den Kraftangriffspunkten wirkenden Stellantriebes nicht genau der tatsächlichen Verstellung an dem Düsenaustrittsspaltes. Bei einer vergebenen Geometrie können diese Werte jedoch ineinander umgerechnet werden. Wenn gemäß dem zweiten Aspekt die Höhe und damit üblicherweise auch die zweite Teilhöhe für die erste und zweite Düsenaustrittseinheit gleich sind, ergibt sich für beide Düsenaustritteinheiten die gleiche Umrechung.

Auch bei einer in anderen Lagerung der deformierbaren Hülse kann die gemäß dem zweiten Aspekt der Erfindung vorgesehene gleiche Höhe der ersten Düsenaustrittseinheit und der zweiten Düsenaustrittseinheit von Vorteil.

Die deformierbare Hülse kann beispielsweise auch ohne eine Lagerung in Sinne einer Einspannung horizontal verschiebbar aufgenommen sein.

Bei einer horizontal verschiebbaren Aufnahme kann die Verformung der deformierbaren Hülse durch eine reine Linearbewegung realisiert werden kann. Bei einer Lagerung der deformierbaren Hülse an einem ihrer Enden ist dagegen bei der Deformation auch eine Kippbewegung zu beachten, welche durch eine geeignete bewegliche Anbindung des zumindest einen Stellantriebes ausgeglichen werden muss.

Durch die Vorgabe der gleichen Höhe für die erste Düsenaustrittseinheit und die zweite Düsenaustrittseinheit kann aus rheologischen Gründen eine Anpassung der Strömungsquerschnitte innerhalb der Düsenaustrittseinheiten vorzusehen sein. Dabei ist auch zu beachten, dass im Rahmen der Erfindung üblicherweise der Dorn und/oder die Hülse entlang der Axialrichtung durch eine von einer elektronischen Steuerung geregelten Stellbewegung beweglich sind, und einen Teil der zuvor beschriebenen Wanddickensteuerung bereitzustellen.

So kann beispielsweise vorgesehen sein, dass der Dorn der ersten Düsenaustrittseinheit und der Dorn der zweiten Düsenaustrittseinheit an einem rückseitigen Führungsschaftabschnitt einen unterschiedlichen Durchmesser aufweisen, wobei für einen Ausgleich des unterschiedlichen Durchmessers eine Adapterhülse vorgesehen ist. Zusätzlich oder alternativ kann an dem Dorn selbst ausgehend von dem rückseitigen Führungsschaftabschnitt auch zunächst eine Durchmesserverringerung vorgesehen sein.

Ein zusätzlich oder alternativ zu dem ersten Aspekt sowie zusätzlich oder alternativ zu dem zweiten Aspekt vorgesehener dritter Aspekt der vorliegenden Erfindung bezieht sich auf eine Einstellung gegenüber dem Extrusionskopf im Sinne einer Voreinstellung.

In diesem Zusammenhang ist es aus der Praxis bekannt, dass Düsenwerkzeuge über Stellmittel verfügen, mit denen der radiale Düsenaustrittsspaltverlauf über den Umfang durch eine Lageänderung eines Düsenrings relativ zu einem meist in radialer Richtung nicht verschiebbaren Dorn verändert werden kann.

Gemäß dem Stand der Technik erfolgt eine solche Voreinstellung üblicherweise durch eine Verschiebung in einer Ebene senkrecht zu der Axialrichtung oder ein Verkippen oder durch ein Verschwenken gegenüber der Axialrichtung.

Im Rahmen der Erfindung kann vor diesem Hintergrund vorgesehen sein, dass das Zwischenmodul als Schnellrüstaufnahme durch geeignete Stellmittel, beispielsweise Zentrierschrauben gegenüber dem Extrusionskopf einstellbar ist. Bei einem Wechsel der Düsenaustrittseinheit ist dann jedoch gegebenenfalls eine Positionsanpassung notwendig.

Vor diesem Hintergrund ist ausgehend von dem Oberbegriff des Patentanspruches 1 gemäß dem dritten Aspekt der Erfindung vorgesehen, dass die erste Düsenaustrittseinheit und die zweite Düsenaustrittseinheit jeweils Verstellmittel für eine statische Vorpositionierung der deformierbaren Hülse gegenüber dem Zwischenmodul und damit auch gegenüber dem Dorn aufweisen. Die beschriebene Vorpositionierung ist dann gewissermaßen Bestandteil jeder Düsenaustrittseinheit, sodass entsprechende Anpassungen und Feineinstellungen bei einem Wechsel der bereits für sich betrachtet korrekt voreingestellten Düsenaustrittseinheiten nicht mehr notwendig sind. Dabei ist zu beachten, dass gerade die Vorpositionierung in der Praxis äußerst anspruchsvoll sein kann und auch wesentlich von den Erfahrungen und dem Geschick der Person abhängen kann, welche die Einstellung durchführt.

Wenn also gemäß dem dritten Aspekt der Erfindung Verstellmittel für eine statische Vorpositionierung der deformierbaren Hülse an der ersten und zweiten Düsenaustrittseinheit vorgesehen sind, kann das Zwischenmodul ohne weiteres unverstellbar und ggf. auch mit einer genau reproduzierbaren Zentrierung an dem Extrusionskopf befestigt sein. Selbst bei einem Austausch oder einer Wartung des Zwischenmoduls kann dann stets eine Fehlausrichtung des Zwischenmoduls gegenüber dem Extrusionskopf ausgeschossen werden.

Gemäß dem dritten Aspekt der Erfindung ist zwischen dem Zwischenmodul einerseits und dem Extrusionskopf andererseits keine spezifische Vorpositionierung vorgesehen bzw. notwendig. Eine entsprechende Korrektur ist dagegen an den Düsenaustrittseinheiten selbst vorgesehen, welche lediglich lagerichtig in das Zwischenmodul einzusetzen sind.

Ähnlich wie bei den aus der Praxis bekannten Ausführungen können die erste Düsenaustrittseinheit und die zweite Düsenaustrittseinheit in einer Ebene senkrecht zu der Axialrichtung oder durch ein Verkippen oder durch ein Verschwenken gegenüber dem Zwischenmodul verstellbar sein.

Gerade im Hinblick auf eine möglichst einfache Ausgestaltung und Umrüstung kann es dann zweckmäßig sein, wenn der zumindest eine Stellantrieb gegenüber einem Grundkörper des Zwischenmoduls beweglich angeordnet ist, auch wenn der Stellantrieb bei einem Wechsel der Düsenaustrittseinheit stets an dem Zwischenmodul verbleibt.

Beispielsweise kann vorgesehen sein, dass das Zwischenmodul einen gegenüber dem Grundkörper in einer Ebene senkrecht zu der Axialrichtung beweglichen Tragring umfasst, welche den zumindest einen Stellantriebe trägt. Durch die Beweglichkeit des Tragringes kann dann die bei jeder Düsenaustrittseinheit vorgesehene Vorpositionierung ausgeglichen werden.

Es liegt dabei auch im Rahmen der Erfindung, den an sich dem Zwischenmodul zugeordneten Tragring an die jeweils in das Zwischenmodul eingesetzte Düsenaustrittseinheit derart zu koppeln, dass der Tragring bei einer Veränderung der statischen Vorpositionierung entsprechend mit bewegt wird.

Üblicherweise werden die deformierbare Hülse sowie der jeweils zugeordnete, angepasste Dorn separat an dem Zwischenmodul bzw. einer Dornaufnahme befestigt. Für die dann bei einem Wechsel der Düsenaustrittseinheit gegeneinander auszutauschenden Dorne können auch Kupplungen und Anschlüsse vorgesehen sein, welche einen einfachen, zuverlässigen und schnellen Austausch ermöglichen. Als Schnellwechselkupplung kann beispielsweise ein Bajonett-Verschluss vorgesehen sein.

Auch zwischen dem Zwischenmodul und der Düsenaustrittseinheit kommt ein Bajonett-Verschluss oder eine vergleichbare Schnellwechselkupplung in Betracht.

Es versteht sich, dass je nach Anwendung und Anforderungen ein gesamter Dorn oder auch nur ein Dornabschnitt, beispielsweise ein vorderer, den Düsenaustrittsspalt begrenzender Dornabschnitt ausgetauscht werden können. Der Austausch lediglich eines Dornabschnittes ist insbesondere dann möglich, wenn die beiden Düsenaustrittseinheiten sich hinsichtlich des Durchmessers des Düsenaustrittsspaltes sowie weiterer Parameter nicht zu stark unterscheiden. Für eine Anpassung an unterschiedliche Dorne kann zusätzlich oder alternativ auch die bereits zuvor erläuterte Adapterhülse eingesetzt werden.

Die Dorne können insbesondere im Bereich des Düsenaustrittsspaltes ohne Einschränkung starr, d.h. in der Regel einstückig, oder auch verstellbar beispielsweise mit einem Grundkörper und einen verstellbaren Ring bzw. einer verstellbaren Hülse ausgeführt sein. Insbesondere kann die verstellbare Hülse mit Einstellschrauben oder anderen Stellmittel für die jeweiligen Anwendungsfall angepasst und voreingestellt werden. Grundsätzlich kommt ein eine dynamisch gesteuerte Einstellung mit geeigneten Stellmitteln in Betracht.

Wie dem Fachmann an sich bekannt, ist auch im Rahmen der Erfindung die dynamische Einstellung der Düsenaustrittsspaltbreite durch eine axiale Relativbewegung zwischen dem Dorn und der deformierbaren Hülse vorgesehen, wozu der Dorn und/oder die deformierbare Hülse axial bewegt werden. Die Steuerung der axialen Bewegung erfolgt dabei über ein Wanddickenstellprogramm. Zusätzlich wird zur Beeinflussung der radialen Wanddickenverteilung (d. h. um den Umfang) die deformierbare Hülse eingesetzt. Um die deformierbare Hülse zu bewegen, kann ein äußerer Ringabschnitt des Extrusionskopfes mit dem daran angeschlossenen Zwischenmodul sowie der Düsenaustrittseinheit als miteinander verbundenes Modul bewegt werden. Grundsätzlich kann die für die Steuerung der Düsenaustrittsspaltbreite notwendige Bewegung alternativ auch an einer Schnittstelle zwischen dem Extrusionskopf und dem Zwischenmodul oder auch zwischen dem Zwischenmodul und der Düsenaustrittseinheit erzeugt werden.

Das erfindungsgemäße Düsenwerkzeugsystem kann als weitere Komponente eine dritte Düsenaustrittseinheit aufweisen, welche eine den Düsenaustrittsspalt begrenzende starre, d.h. nicht verstellbare Hülse oder statisch verstellbare Hülse aufweist. Ein wesentlicher Aspekt der vorliegenden Erfindung liegt darin, dass die erste und die zweite Düsenaustrittseinheit leicht gegeneinander ausgewechselt werden können und mit dem gleichen zumindest einen Stellantrieb zusammenwirken, welcher dem Zwischenmodul zugeordnet ist. Davon ausgehend stellt die dritte Düsenaustrittseinheit eine Ergänzung des Gesamtsystems mit einer vereinfachten Funktionalität dar. Bei einem Einsatz der dritten Düsenaustrittseinheit bleibt der zumindest eine Stellantrieb ungenutzt.

Im Rahmen der Erfindung wird die Bereitstellung unterschiedlicher Austrittsdurchmesser schneller, einfacher und zuverlässiger durch den Austausch der Düsenaustrittseinheiten an dem Zwischenmodul erreicht. Für die verschiedenen Düsenaustrittseinheiten sind dabei neben unterschiedlichen mechanischen Anschlägen üblicherweise aus unterschiedlichen Einstellungen vorgesehen. So kann beispielsweise vorgesehen sein, dass die mechanischen Anschläge lediglich für eine Absicherung vorgesehen sind, während bei dem üblichen Betrieb vor den mechanischen Anschlägen liegende Endpositionen in einem Datenspeicher der Steuerung hinterlegt sind. Auch weitere Parameter und Einstellungen können spezifisch für jede Düseneintrittseinheit vorgesehen sein. Dazu können beispielsweise auch zulässige Stellgeschwindigkeiten und die Position, an der zumindest eine Stellantrieb an die deformierbare Hülse anzuschließen ist, gehören.

Zweckmäßigerweise sind für die erste und die zweite Düsenaustrittseinheit spezifische und zumindest teilweise unterschiedliche Parameter in dem Datenspeicher der Steuerung hinterlegt. Dabei kann ein Wechsel der Düsenaustrittseinheit der Steuerung auf unterschiedliche Art übermittelt werden. Denkbar ist eine manuelle Eingabe durch einen Benutzer, wobei dann jedoch eine Fehlbediendung nicht grundsätzlich ausgeschlossen werden kann. Auch für solche Fälle kann aber durch die jeweils individuell für jede Düsenaustrittseinheit definierten mechanischen Anschläge eine Beschädigung vermieden werden.

Gemäß einer bevorzugten Weiterbildung der Erfindung weisen die zumindest zwei Düsenaustrittseinheiten Identifizierungsmittel auf, welche eine Unterscheidung ermöglichen. Im einfachsten Fall kann es sich dabei um eine Typenbezeichnung, ein Typenschild und/oder eine Seriennummer handeln, wobei dadurch eine sichere Identifizierung durch einen Benutzer möglich ist und die Gefahr einer Fehlbedienung zumindest reduziert ist.

Zusätzlich oder alternativ können auch Identifizierungsmittel vorgesehen sein, welche eine automatische Identifizierung mit Hilfe der Steuerung ermöglichen. Unter Berücksichtigung der üblichen Einsatzbedingungen der Düsenaustrittseinheiten und insbesondere vergleichsweise hoher Temperaturen sind einfach ausgestaltete Identifizierungsmittel vor diesem Hintergrund von Vorteil. Beispielsweise können einfache robuste Schalter oder Ausformungen nach Art von Nocken, Öffnungen oder Schlitze vorgesehen sein, welche dann mit geeigneten Auslesemittel ausgelesen werden können. Mehrere Schalter oder Ausformungen können dabei auch eine Kodierung ermöglichen. Exemplarisch können mehrere an den Düsenaustrittseinheiten vorgesehene Nocken, Vorsprüngen, Vertiefungen oder dergleichen mit Schaltern an der Zwischenmodul zusammenwirken, um eine eindeutige automatische Erkennung zu ermöglichen. Auch eine optische Erkennung mit Schlitzen, Kerbe, Löchern oder der gleichen kann einfach und robust realisiert werden.

Erfindungsgemäß sind zumindest zwei gegeneinander austauschbare Düsenaustrittseinheiten vorgesehen. Selbstverständlich können im Rahmen der Erfindung auch beliebig viele Düsenaustrittseinheiten vorgesehen sein, um eine einfache und schnelle Umrüstung zu ermöglichen. Ein so gebildetes System kann auch im Nachhinein beliebig verändert und insbesondere erweitert werden.

Grundsätzlich können innerhalb eines gesamten Systems auch zwei Düsenaustrittseinheiten mit einem gleichen Austrittsdurchmesser oder sogar einer gleichen Bauart vorgesehen sein, welche sich bespielweise durch eine spezifische Voreinstellung für ein bestimmtes Produkt unterscheiden. Zu den spezifischen Voreinstellungen gehören insbesondere statische Einstellungen beispielsweise an einen verstellbaren Dorn oder auch eine Verstellung gemäß dem dritten Aspekt der vorliegenden Erfindung. Bei einem Wechsel des herzustellenden Produktes sind dann keine oder zumindest weniger Einstellungsarbeiten notwendig.

Die Erfindung wird nachfolgend anhand exemplarischer Zeichnungen erläutert.

Es zeigen:
- Fig. 1: Ein erfindungsgemäßes Düsenwerkzeugsystem mit einem Zwischenmodul und zwei gegeneinander austauschbaren Düsenaustrittseinheiten,
- Fig. 2A: das Zwischenmodul mit einer ersten Düsenaustrittseinheit in einem Horizontalschnitt,
- Fig. 2B: das Zwischenmodul mit einer zweiten Düsenaustrittseinheit in einem Horizontalschnitt,
- Fig. 3: einen Vertikalschnitt durch ein Düsenwerkzeug,
- Fig. 4: eine Ansicht gemäß der Fig. 3 mit einem Vergleich eines kleinen Durchmessers auf der rechten Seite einer Mittelachse und eines großen Durchmessers auf der linken Seite der Mittelachse,
- Fig. 5: eine Ansicht gemäß der Fig. 4 für eine alternative Ausgestaltung,
- Fig. 6 bis Fig. 11C: alternative Ausgestaltungen des Düsenwerkzeugs.

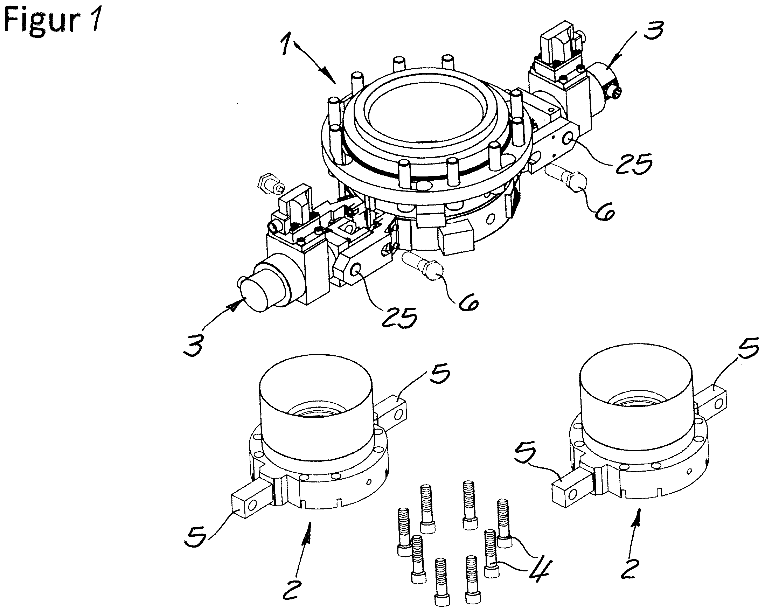

Die Fig. 1 zeigt in einem demontierten Zustand ein Düsenwerkzeugsystem zum Extrusionsblasformen von Kunststoffbehälter, welches ein Zwischenmodul 1 und zwei Düsenaustrittseinheiten 2 umfasst.

In der allgemeinen Darstellung der Fig. 1 sind die beiden Düsenaustrittseinheiten 2 gleich dargestellt. Diese weisen jedoch - wie nachfolgend im Detail beschrieben - unterschiedliche Austrittsdurchmesser auf.

Gemäß der Fig. 1 ergibt sich des Weiteren, dass zwei einander gegenüberliegende Stellantriebe 3 an dem Zwischenmodul 1 angeordnet sind. Die beiden Düsenaustrittseinheiten 2 können in einem Austausch zueinander in dem Zwischenmodul 1 mit Befestigungsschrauben 4 eingesetzt werden. Des Weiteren können Anbindungselemente 5 der Düsenaustrittseinheiten 2 mit Verbindungsbolzen 6 an die Stellantriebe 3 angeschlossen werden.

Um die Düsenaustrittseinheiten 2 zu wechseln, müssen lediglich die Befestigungsschrauben 4 und die Verbindungsbolzen 6 gelöst und wieder befestigt werden.

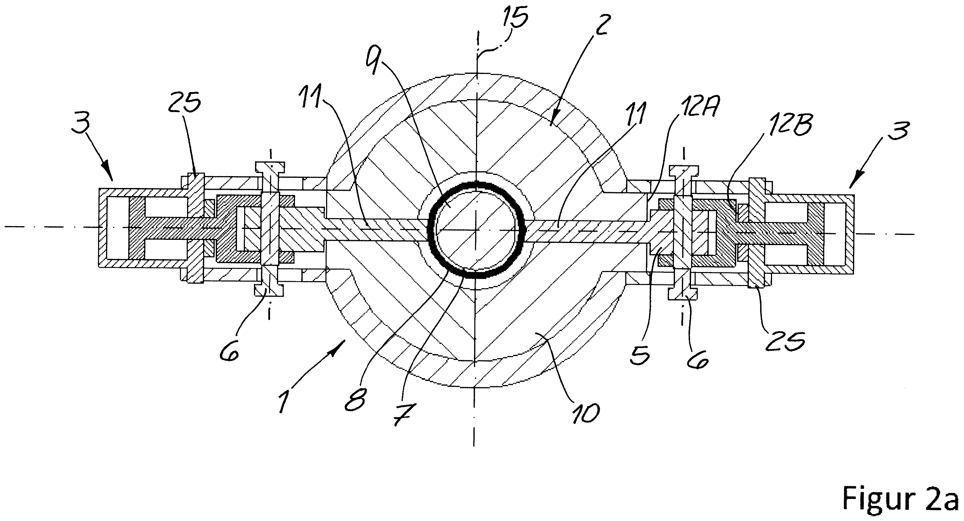

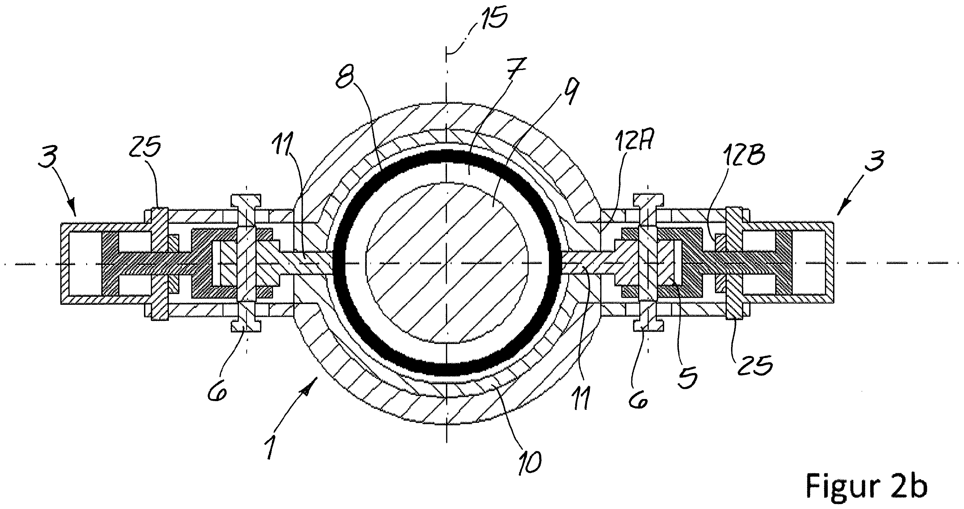

Die Fig. 2A und 2B zeigen stark schematisiert einen horizontalen Schnitt durch das Zwischenmodul 1 mit jeweils einer eingesetzten Düsenaustrittseinheit 2, wobei auch bereits die Bereitstellung unterschiedlicher Austrittsdurchmesser angedeutet ist.

Gemäß der Fig. 2 ist ein in einem Düsenaustrittsspalt S mündender Flusskanal 7 zwischen einer deformierbaren Hülse 8 und einem Dorn 9 gebildet. Wie sich auch aus den weiteren nachfolgenden Abbildungen ergibt, ist die Hülse 8 gemäß der Fig. 2A und 2B in der dargestellten horizontalen Schnittebene von einem unteren Aufnahmekörper 10 umgeben.

Das in der Fig. 1 dargestellte Anbindungselement 5 geht an einer Stufe in einen Stangenabschnitt 11 über, welcher an der Hülse 8 einen Krafteinleitungspunkt definiert.

Um die Hülse 8 unabhängig von einer Programmsteuerung sicher vor einer Überlastung und Beschädigungen zu schützen, sind mechanische Anschläge 12A, 12B vorgesehen, welche einen Stellweg begrenzen. Bei einer vergleichenden Betrachtung der Fig. 2A und 2B ist ersichtlich, dass unterschiedlich große Stellwege bereitgestellt werden.

Wenn gemäß der Fig. 2A ein kleinerer Austrittsdurchmesser mit einer entsprechend kleinen Hülse 8 bereitgestellt wird, ist ein ersten, kleinerer Stellweg vorgesehen. Der eine drückende Stellbewegung begrenzende innere Anschlag 12A wird von dem unteren Aufnahmekörper 10 als Bestandteil der entsprechenden Düsenaustrittseinheit 2 gebildet. Der äußere mechanische Anschlag 12B ist dagegen an dem Stellantrieb 3 gebildet und somit dem Zwischenmodul 1 zugeordnet.

Für den größeren Austrittsdurchmesser ergibt sich im Zusammenhang mit der in Fig. 2B dargestellten zweiten Düsenaustrittseinheit 2 eine entsprechende Begrenzung eines zweiten Stellweges, wobei der zweite Stellweg größer ist. Dies wird dadurch erreicht, dass durch eine entsprechende Ausgestaltung des unteren Aufnahmekörpers 10 der innere mechanische Anschlag 12B in radialer Richtung nach innen versetzt ist.

Durch die Bereitstellung des äußeren mechanischen Anschlags 12B an dem Stellantriebe 3 bildet dieser für die verschiedenen Düsenaustrittseinheiten 2 bezüglich des Stellwegs ein Referenz- bzw. Fixpunkt.

In den Fig. 2A und 2B ist die elastisch deformierbare Hülse 3 im undefomierten Zustand, d. h. in einer kräftefreien Mittellage dargestellt.

Durch die Festlegung des äußeren mechanischen Anschlags 12B an dem Stellantrieb 3 sowie dem unterschiedlichen Stellweg ergibt sich damit auch eine unterschiedliche Mittellage.

Die Montage einer gesamten Düsenaustrittseinheit erfolgt zweckmäßigerweise in der Mittellage, sodass dann üblicherweise die Stellantriebe 3 entsprechend zu verfahren sind.

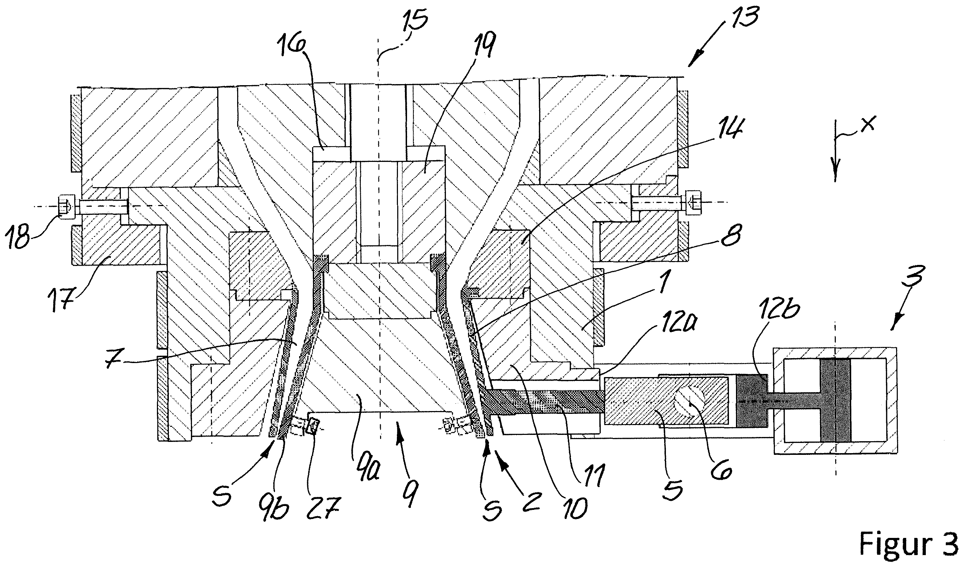

Die Fig. 3 zeigt einen Vertikalschnitt durch ein an einem Extrusionskopf 13 angeschlossenen Zwischenmodul 1 mit einer darin aufgenommenen Düsenaustrittseinheit 2.

Die Düsenaustrittseinheit umfasst in dem dargestellten Ausführungsbeispiel einen oberen Aufnahmekörper 14 und den unteren Aufnahmekörper 10, welche die Hülse 8 an ihrem oberen Ende halten. Nahe eines unteren Endes der Hülse 8 ist der Stangenabschnitt 11 insbesondere material- oder stoffschlüssig angesetzt, wobei der Stangenabschnitt 11 in das Verbindungselement übergeht.

Die Schnittdarstellung gemäß der Fig. 3 ist an einer Mittelachse 15 um 90° abgewinkelt. Die Fig. 3 bezieht sich in diesem Zusammenhang auch auf eine Ausgestaltung mit zwei einander gegenüberliegenden Stellantrieben 3, wie diese in den Fig. 2A und 2B dargestellt sind.

Wenn im Rahmen der Erfindung ein anderer Austrittsdurchmesser bereitgestellt werden soll, so ist lediglich die Düsenaustrittseinheit 2 auszuwechseln, während das Zwischenmodul 1 als Schnellrüstvorrichtung an dem Extrusionskopf verbleibt. Die Düsenaustrittseinheit 2 umfasst des Weiteren auch den bereits zuvor beschriebenen Dorn, der entlang einer Axialrichtung X in einer Dornaufnahme 16 des Extrusionskopfes 13 aufgenommen ist.

Gemäß der Fig. 3 ist das Zwischenmodul 1 mit einem Haltering 17 an dem Extrusionskopf 13 befestigt, wobei das Zwischenmodul 1 durch Stellmittel 18 in Form von Schrauben in einer Ebene senkrecht zu der Axialrichtung X gegenüber dem Extrusionskopf 13 verstellt werden kann. In Bezug auf den in der Dornaufnahme 16 des Extrusionskopfes 13 aufgenommenen Dorn 9 erfolgt also eine Vorpositionierung der deformierbaren Hülse 8 gegenüber dem Dorn 9, wodurch um den Umfang die Breite des Düsenaustrittsspaltes S vorverstellt werden kann. Durch eine Betätigung der Stellmittel 18 kann also eine genau mittige oder auch bewusst eine außermittige Anordnung des Dorns 9 innerhalb der elastischen Hülse 8 erreicht werden.

Nachteilig ist dabei jedoch, dass bei einem Wechsel der Düsenaustrittseinheit üblicherweise eine separate Vorpositionierung notwendig oder zumindest zweckmäßig ist.

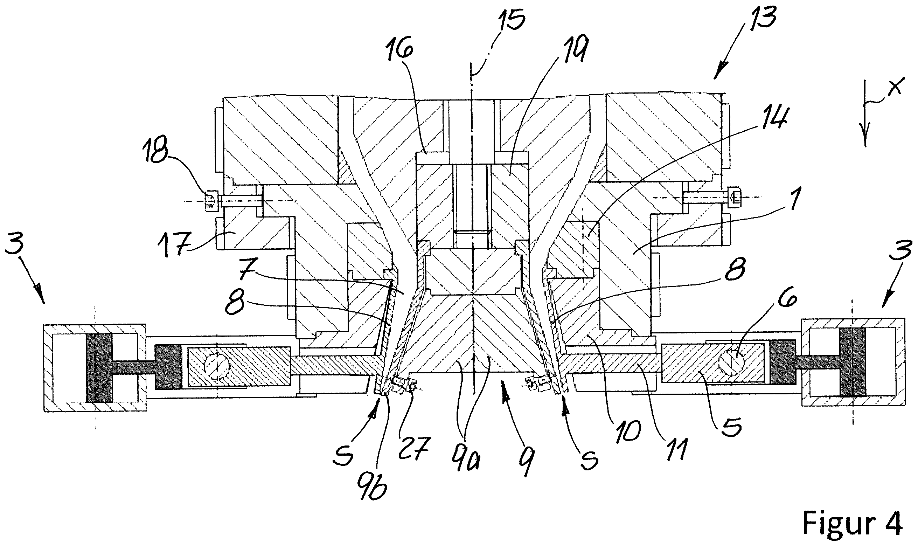

Die Fig. 4 zeigt in einem Vertikalschnitt die exemplarische Gegenüberstellung für einen ersten Austrittsdurchmesser auf der rechten Seite der Mittelachse 15 und einem größeren zweiten Außendurchmesser auf der linken Seite der Mittelachse 15, wobei bezüglich der konstruktiven Ausgestaltung und der Zuordnung der Komponenten auf die obigen Erläuterungen verwiesen werden kann.

Aus der Fig. 4 ist darüber hinausgehend ersichtlich, dass trotz unterschiedlicher Austrittsdurchmesser gemäß einer bevorzugten Ausgestaltung der Erfindung vorgesehen ist, dass die zumindest zwei Düsenaustrittseinheiten 2 sich bezogen auf den jeweiligen Düsenaustrittsspalt S entlang der Axialrichtung X über die gleiche Höhe erstrecken.

Dabei ergibt sich der Vorteil, dass unabhängig von dem Austrittsdurchmesser die Krafteinleitungspunkte nahe an einem unteren Ende der Hülse 8 gebildet sind, sodass die Bewegung der Stellantriebe 3 in etwa auch dem Hub der Hülse 8 an ihrem unteren Ende entspricht. Auch für nachgelagerte Einrichtungen der Extrusionsblasanordnung wie beispielsweise Sensoren oder dergleichen ergibt sich durch die gleiche Höhe der Düsenaustrittseinheiten 2 in der Regel ein geringerer Anpassungsbedarf.

Bereits in der Fig. 4 ist zu erkennen, dass sich gerade durch die Forderung einer gleichen Höhe unabhängig von dem Austrittsdurchmesser die Strömungspfade innerhalb des Düsenwerkzeuges wesentlich verändern können.

Bei der Auslegung der Flusskanalgeometrie der Zwischenmoduls 1 und der Düsenaustrittseinheiten 2 muss den rheologischen Anforderungen, die sich aus dem Fließverhalten der Kunststoffschmelze ergeben, Rechnung getragen werden. Eine dieser Anforderungen ist üblicherweise die kontinuierliche Querschnittsverringerung der Flusskanals hin zum Düsenaustrittsspalt S. Diese Anforderung muss auch bei unterschiedlichen großen Düsenaustrittsspalten S bzw. Austrittsdurchmessern erfüllt werden und bestimmt entscheidend den maximal nutzbaren Relativhub zwischen Düsenaustrittseinheit 2 bzw. der deformierbaren Hülse 8 einerseits und dem Dorn 9 andererseits.

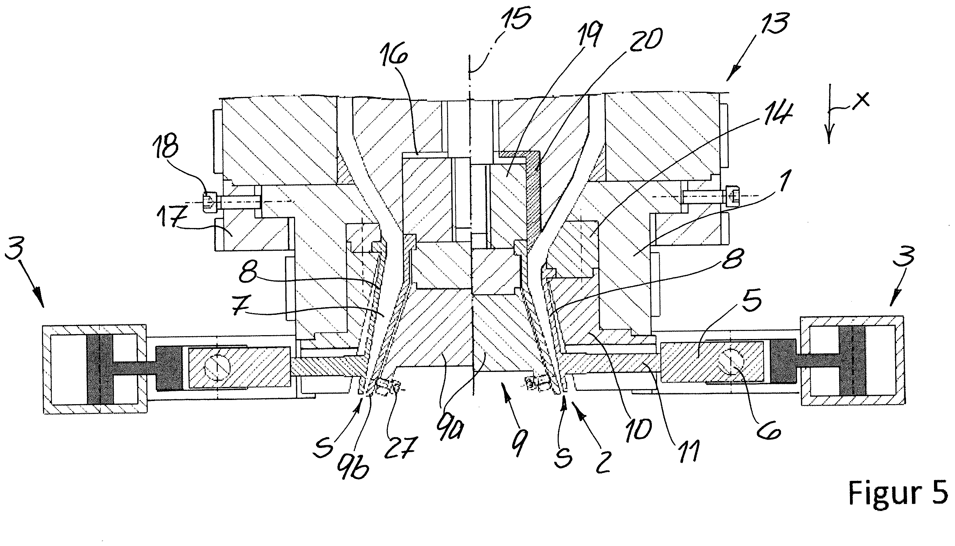

Die Fig. 5 zeigt in diesem Zusammenhang ebenfalls auf der linken Seite der Mittelachse 15 einen größeren Austrittsdurchmesser als auf der rechten Seite. Aus reologischen Gründen kann es dann zweckmäßig sein, wenn trotz der gleichen Gesamthöhe die für die unterschiedlichen Düsenaustrittseinheiten 2 vorgesehenen Hülsen 8 selbst eine unterschiedliche Höhe aufweisen.

Darüber hinaus kann es auch zweckmäßig sein, an einem rückseitigen Führungsschaftabschnitt 19 des jeweils vorgesehenen Dorns 9 unterschiedliche Durchmesser vorzusehen, wobei zu dem Ausgleich beispielsweise eine Adapterhülse 20 zweckmäßig ist. Der Dorn 9 vollführt dann seine Längsbewegung innerhalb der Adapterhülse 20, welche auch einen Teil des Flusskanals für die Kunststoffschmelze in geeigneter Form begrenzt und formt.

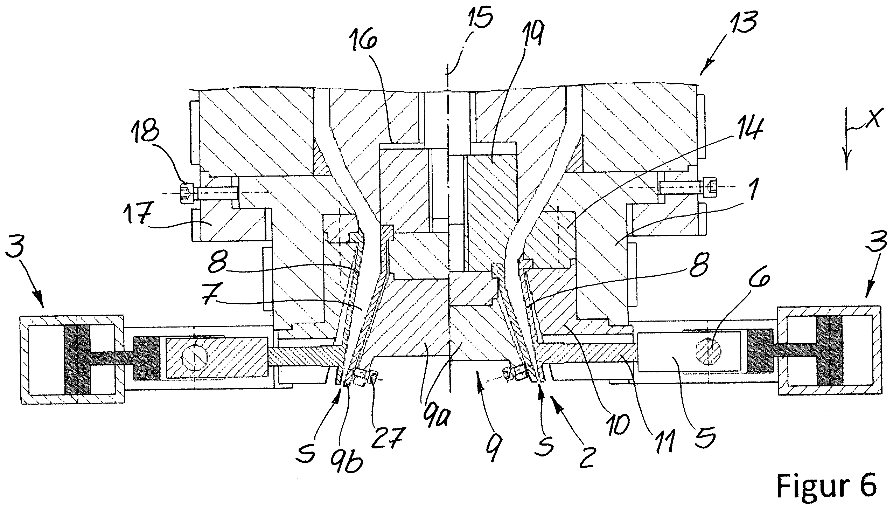

Um den Flusskanal, in geeigneter Weise auszuformen kann alternativ ausgehend von dem Führungsschafftabschnitt 19 auch zunächst eine Durchmesserverringerung vorgesehen sein, wie dies exemplarisch in der Fig. 6 dargestellt ist.

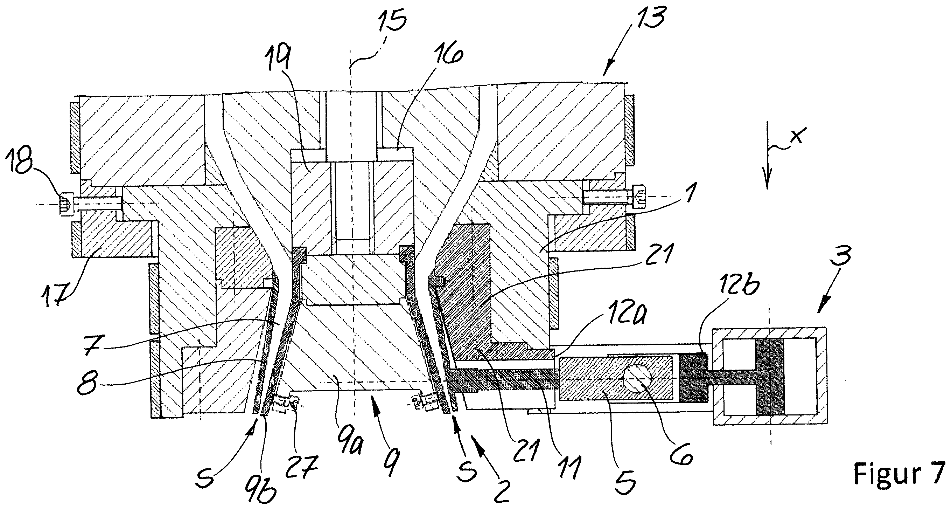

Die Darstellung der Fig. 7 entspricht auf der linken Seite der Mittelachse 15 der Fig. 3. Auf der rechten Seite ist dagegen dargestellt, dass die Hülse 8 auch von einem einteiligen Aufnahmekörper 21 gehalten sein kann, wobei dann die Hülse 8 beispielsweise durch eine Art Bajonettverschluss in dem einteiligen Aufnahmekörper 21 aufgenommen sein kann.

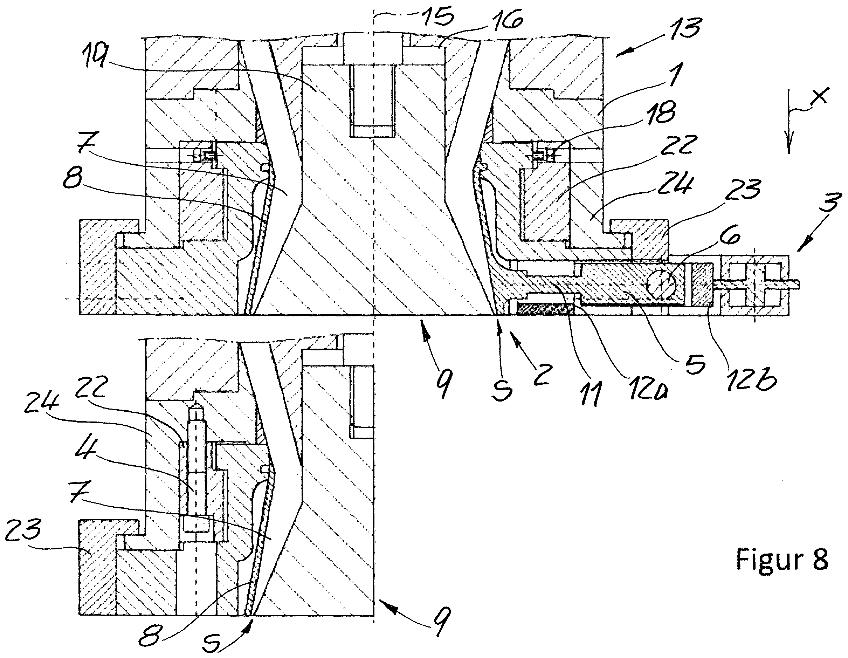

Schließlich zeigt die Fig. 8 eine weitere Ausführungsform, bei der die zuvor im Zusammenhang mit der Fig. 3 beschriebene Vorpositionierung nicht zwischen dem Explosionskopf 13 und dem Zwischenmodul 1 sondern an den auswechselbaren Düsenaustrittseinheiten 2 realisiert ist. Die Düsenaustrittseinheiten 2 weisen hierzu um den einteiligen Aufnahmekörper 21 eine ringförmige Zentriereinheit 22 mit Stellemitteln 18 auf.

Da die Zentriereinheit 22 gemäß der Fig. 8 zusätzlich Bestandteil der Düenaustrittseinheit 2 ist, muss bei einem Wechsel der Düsenaustrittseinheit 2 in der Regel keine erneute Vorpositionierung vorgenommen werden. Die gesamte Düsenaustrittseinheit 2 kann also mit einer Vorpositionierung vollständig für die Produktion eines bestimmten Produktes eingestellt sein, sodass dadurch eine weitere Optimierung erreicht werden kann.

Allerdings ist zu beachten, dass durch die Integration der Vorpositionierung in die Düsenaustrittseinheiten 2 auch die Position der deformierbaren Hülse gegenüber dem zumindest einen Stellantriebe 3 verändert wird. Um dann in diesem Zusammenhang aufwendige Anpassungen zu vermeiden, ist gemäß der Fig. 8 ein dem Zwischenmodul 1 zugeordneter Tragring 23 vorgesehen, welcher gegenüber einem Grundkörper 24 des Zwischenmoduls 1 in einer Ebene senkrecht zu der Axialrichtung X beweglich ist.

Auch bei einem Wechsel der Düsenaustrittseinheit 2 verbleibt also der zumindest eine Stellantriebe 3 an dem aus Tragring 23 und Grundkörper 24 gebildeten Zwischenmodul 1. Dabei ist es zweckmäßig, den Tragring 23 im montierten Zustand beispielsweise durch Schrauben mit der jeweiligen Düsenaustrittseinheit 2 zu verbinden, damit auch bei einer Anpassung der Vorpositionierung mittels der Zentriereinheit 22 und den Stellmitteln 18 keine weitere Korrektur oder Einstellung an dem zumindest einen Stellantrieb 3 notwendig ist.

Die Fig. 8 zeigt in dem oberen Abschnitt in bereits vorgbeschriebener Weise eine Schnittdarstellung mit einer Abwinklung um 90°. Des Weiteren ist in einem unteren Abschnitt eine Zwischenstellung dargestellt, um die lösbare Verbindung zwischen den auswechselbaren Düsenaustrittseinheiten 2 und dem Zwischenmodul 1 mit den Befestigungsschrauben 4 zu verdeutlichen. Die Befestigungsschrauben 4 erstrecken sich dabei durch die ringförmige Zentriereinheit 22 der Düsenaustrittseinheiten 2.

Bei den zuvor dargestellten Ausführungsformen ist die deformierbare Hülse 8 an ihrem oberen Ende gehalten, so dass bei einer Deformation mittels der Stellantriebe 3 auch eine Verformung der deformierbaren Hülse 8 in Form einer Verkippung um die endseitige Lagerung erfolgt. Zum Ausgleich der Kippbewegung sind die Anbindungselemente 5 gelenkig, insbesondere mit dem Verbindungsbolzen 6 an die Stellantriebe 3 angeschlossen. Des Weiteren müssen auch Stellantriebe 3 mit einer Gelenkverbindung 25 an dem Zwischenmodul 1 angeordnet sein.

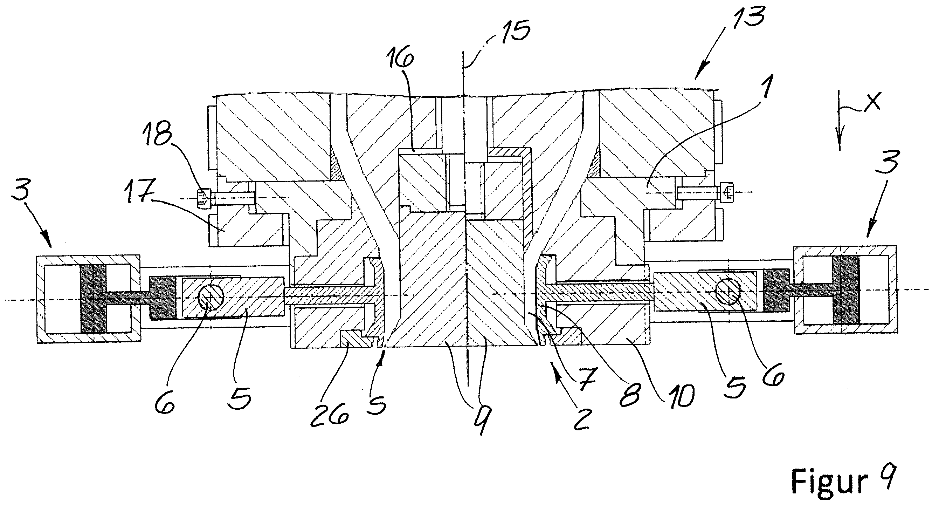

Die Fig. 9 zeigt eine Ausgestaltung, bei welcher die deformierbare Hülse 8 ohne eine Lagerung in Sinne einer Einspannung horizontal verschiebbar an dem Zwischenmodul 1 aufgenommen ist, wobei das Zwischenmodul 1 für die Führung der deformierbare Hülse 8 an seiner Unterseite einen Stützring 26 aufweist.

Bei der dargestellten horizontal verschiebbaren Aufnahme kann die Verformung der deformierbaren Hülse 8 durch eine reine Linearbewegung realisiert werden, so dass es nicht notwendig ist, eine Kippbewegung auszugleichen. Somit sind konstruktive Vereinfachungen wie beispielsweise eine feste Anordnung der Stellantriebe 3 an dem Zwischenmodul 1 möglich. Nachteilig ist allerding die Bewegung der deformierbaren Hülse 8 auf dem Stützring 26, welche im Betrieb mit einer begrenzten Standzeit verbunden ist.

Hinsichtlich es Dornes 9 kommen im Rahmen der Erfindung unterschiedliche Ausgestaltungen in Betracht. So zeigen die Fig. 8 und Fig. 9 jeweils einen starren, im Bereich des Düsenaustrittsspaltes S starren, einstückigen Dorn 9. In den Fig. 3 bis Fig. 7 sind dagegen Ausgestaltungen des Dorns 9 mit einem Dornhauptkörper 9a und einer verstellbaren Hülse 9b dargestellt. Die verstellbare Hülse 9b kann in den Ausführungsbeispielen der Fig. 3 bis Fig. 7 mit Einstellschrauben 27 voreingestellt werden, wobei zusätzlich oder alternativ auch eine dynamische Verstellung möglich ist.

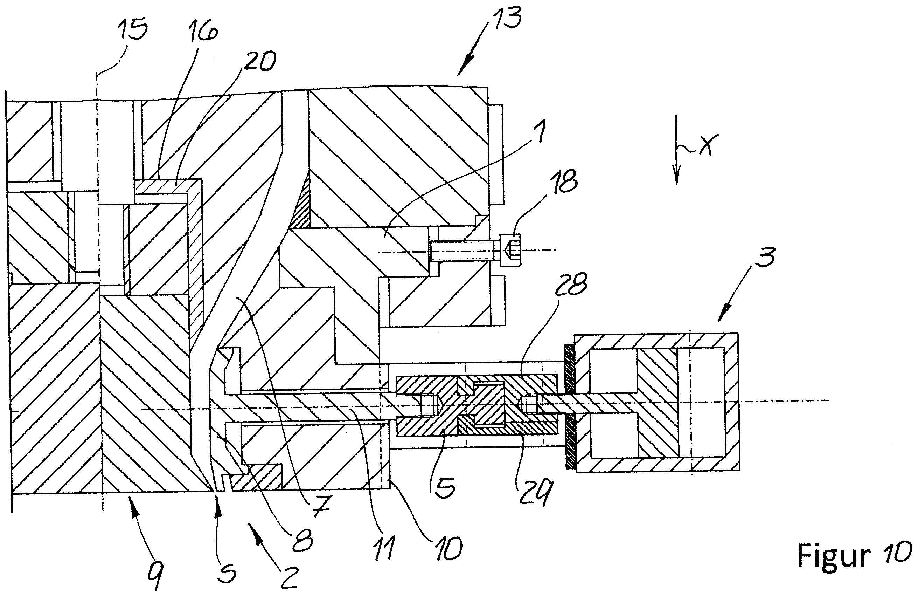

Die zuvor beschriebene Verbindung der Anbindungselemente 5 der Düsenaustrittseinheiten 2 mit den Stellantriebe 3 mittels Verbindungsbolzen 6 ist lediglich exemplarisch, wobei vielfältige alternative Ausgestaltungen in Betracht kommen. Als weiteres Beispiel hierzu zeigt die Fig. 10 eine formschlüssige Verbindung, bei der die Anbindungselemente 5 jeweils einen Passkragen aufweisen, welcher von einem an den Stellantrieb 3 angeschlossenen klauenartigen Gegenstück 28 mit Klemmplatte 29 gegriffen ist.

Des Weiteren kommen auch Schnellspannsysteme, insbesondere federbelastete Schnellspannsysteme, Kniehebel-Systeme oder dergleichen in Betracht.

Grundsätzlich kann die Erfindung auch bei Mehrfach-Extrusionsköpfen eingesetzt werden. Dabei können dann die Düsenaustrittseinheiten 2 der mehreren Extrusionsköpfe für einen schnellen Wechsel auf einem Wechselträger montiert sein, welcher dann vorzugsweise in einem Arbeitsgang an dem Mehrfach-Extrusionskopf montiert bzw. demontiert werden kann. Bei einem Mehrfach-Extusionskopf können die einzelnen Extrusionsköpfe jeweils eingene Stellantriebe 3. Alternativ können für die Extrusionsköpfe auch zentrale Stellantriebe vorgesehen sein, welche dann jeweils parallel auf die entsprechenden Kraftangriffspunkte der Extrusionsköpfe wirken.

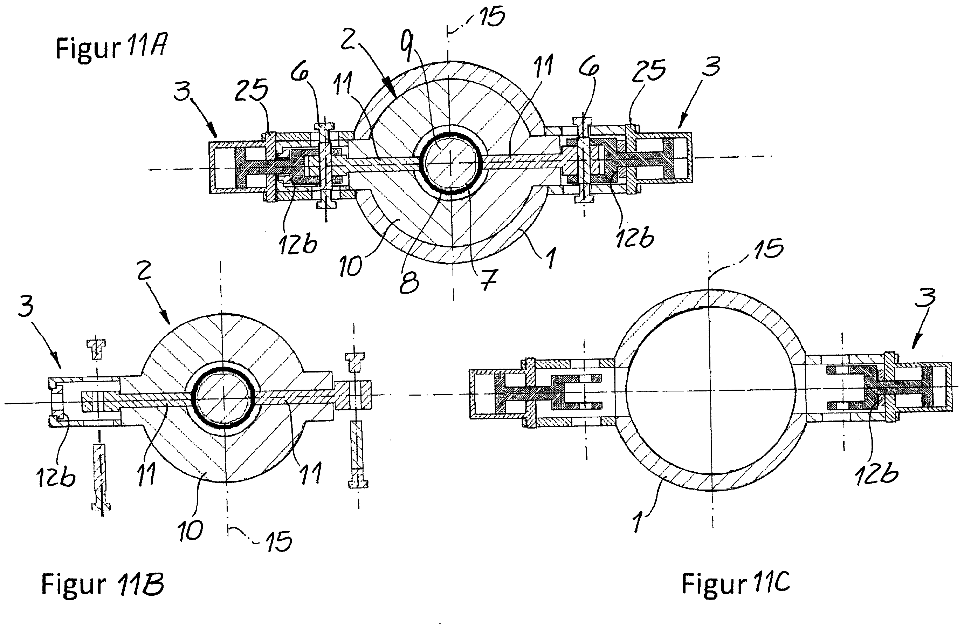

Allgemein kann der äußere mechanische Anschlag 12b in Abweichung zu dem zuvor beschriebenen Ausgestaltungen auch durch die erste bzw. die zweite Düsenaustrittseinheit 2 bereitgestellt werden. Zur Verdeutlichung dieser Option wir auf die Fig. 11A bis 11C verwiesen. Die Fig. 11A zeigt einen horizontalen Schnitt wie in den Fig. 2a und 2b.

Bei einem Wechsel der Düsenaustrittseinheit 2 wird diese nach einem Lösen der Verbindungsbolzen 6 von dem Zwschenmodul 1 getrennt, wobei hierzu in der Fig. 11B alleine die getrennte Düsenaustrittseinheit 2 und in der Fig. 11C das Zwischenmodul 1 ohne die Düsenaustrittseinheit 2 dargestellt sind.

Die Figuren 11A bis 11C zeigen jeweils bezüglich eine Mittelachse einerseits auf der linken Seite und andererseits auf der rechten Seite unterschiedliche Ausgestaltungen. Bei einer vergleichenden Betrachtung der Fig. 11A bis 11C ist zu erkennen, dass der äußere mechanische Anschlag 12b für das maximale Ziehen auf der linken Seite der Düsenaustrittseinheit 2 und auf der rechten Seite dem Zwischenmodul 1 zugeordnet ist. Wenn gemäß der linken Seite der Fig. 11A bis 11C der äußere mechanische Anschlag 12b der Düsenaustrittseinheit 2 zugeordnet ist, können die gegeneinander auszutauschenden Düsenaustrittseinheiten 2 so aufeinander abgestimmt sein, dass der Austausch in einem kräftefreien Zustand der deformierbaren Hülsen 8, also in der Mittellage bei der gleichen Hubposition der Stellantriebe 3 erfolgen kann.

## Patentansprüche

1. Düsenwerkzeugsystem zum Extrusionsblasformen mit einem Zwischenmodul (1) und zumindest einer ersten Düsenaustrittseinheit (2) und einer zweiten Düsenaustrittseinheit (2), welche jeweils zwischen einem sich in einer axialen Richtung (x) erstreckenden Dorn (9) und einer deformierbaren Hülse (8) einen verstellbaren Düsenaustrittsspalt ausbilden, welche im Austausch zueinander an dem Zwischenmodul (1) anschließbar sind und welche einen zueinander unterschiedlichen ersten Austrittsdurchmesser und einen größeren zweiten Austrittsdurchmesser aufweisen, wobei zumindest ein Stellantrieb (3) für eine reversible Verformung der Hülse (8) an dem Zwischenmodul (1) angeordnet ist und über eine lösbare Koppelungsanordnung an die deformierbare Hülse (8) anschließbar ist, **dadurch gekennzeichnet, dass** die erste Düsenaustrittseinheit (2) durch zumindest einen inneren mechanischen Anschlag (12a) einen ersten Stellweg des Stellantriebs (3) und die zweite Düsenaustrittseinheit (2) durch zumindest einen inneren mechanischen Anschlag (12a) einen gegen über dem ersten Stellweg größeren zweiten Stellweg des Stellantriebs (3) begrenzen.

2. Düsenwerkzeugsystem nach Anspruch 1, **dadurch gekennzeichnet, dass** die inneren mechanischen Anschläge (12a) für drückende Stellbewegung des zumindest einen Stellantriebes (3) jeweils durch eine Anschlagfläche der jeweiligen Düsenaustrittseinheit (2) gebildet sind.

3. Düsenwerkzeugsystem nach Anspruch 1 oder 2, **dadurch gekennzeichnet, dass** für eine ziehende Stellbewegung ein äußerer mechanischer Anschlag (12b) dem Zwischenmodul (1) zugeordnet ist.

4. Düsenwerkzeugsystem nach Anspruch 1 oder 2, **dadurch gekennzeichnet, dass** für eine ziehende Stellbewegung ein äußerer mechanischer Anschlag (12b) der jeweiligen Düsenaustrittseinheit (2) zugeordnet ist.

5. Düsenwerkzeugsystem nach einem der Ansprüche 1 bis 4, **dadurch gekennzeichnet, dass** der zumindest eine Stellantrieb (3) unterschiedliche Stellpositionen für eine Mittellage der deformierbaren Hülsen (8) der ersten Düsenaustrittseinheit (2) einerseits und der zweiten Düsenaustrittseinheit (2) andererseits aufweist.

6. Düsenwerkzeugsystem nach einem der Ansprüche 1 bis 5 oder dem Oberbegriff von Anspruch 1, **dadurch gekennzeichnet, dass** die erste Düsenaustrittseinheit (2) und die zweite Düsenaustrittseinheit (2) sich bezogen auf den jeweiligen Düsenaustrittsspalt entlang der Axialrichtung (x) über die gleiche Höhe erstrecken.

7. Düsenwerkzeugsystem nach einem der Ansprüche 1 bis 6 oder dem Oberbegriff von Anspruch 1, **dadurch gekennzeichnet, dass** die erste Düsenaustrittseinheit (2) und die zweiten Düsenaustrittseinheit (2) jeweils Verstellmittel für eine statische Vorpositionierung der deformierbaren Hülse (8) gegenüber dem Zwischenmodul (1) aufweisen.

8. Düsenwerkzeugsystem nach Anspruch 7, **dadurch gekennzeichnet, dass** die erste Düsenaustrittseinheit (2) und die zweite Düsenaustrittseinheit (2) in einer Ebene senkrecht zu der Axialrichtung (x) oder durch ein Verkippen oder durch ein Verschwenken gegenüber dem Zwischenmodul (1) verstellbar sind.

9. Düsenwerkzeugsystem nach Anspruch 7 oder 8, **dadurch gekennzeichnet, dass** der zumindest eine Stellantrieb (3) gegenüber einem Grundkörper (24) des Zwischenmoduls (1) beweglich angeordnet ist.

10. Düsenwerkzeugsystem nach Anspruch 9, **dadurch gekennzeichnet, dass** das Zwischenmodul (1) einen gegenüber dem Grundkörper (24) in einer Ebene senkrecht zu der Axialrichtung (x) beweglichen Tragring (23) umfasst, welcher den zumindest einen Stellantrieb (3) trägt.

11. Düsenwerkzeugsystem nach einem der Ansprüche 1 bis 10, **dadurch gekennzeichnet, dass** der Dorn (9) und/oder die deformierbare Hülse (8) entlang der Axialrichtung (x) durch von einer elektronischen Steuerung geregelte Stellbewegungen beweglich sind.

12. Düsenwerkzeugsystem nach Anspruch 11, **dadurch gekennzeichnet, dass** der Dorn (9) der ersten Düsenaustrittseinheit (2) und der Dorn (9) der zweiten Düsenaustrittseinheit (2) an einem rückseitigen Führungsschaftabschnitt (19) einen unterschiedlichen Durchmesser aufweisen, wobei für einen Ausgleich eine Adapterhülse (20) vorgesehen ist.

13. Düsenwerkzeugsystem nach einem der Ansprüche 1 bis 12 **dadurch gekennzeichnet, dass** die deformierbare Hülse (8) der ersten Düsenaustrittseinheit (2) und die deformierbare Hülse (8) der zweiten Düsenaustrittseinheit (2) eine unterschiedliche Länge entlang der axialen Richtung (x) aufweisen.

14. Düsenwerkzeugsystem nach einem der Ansprüche 1 bis 13, **dadurch gekennzeichnet, dass** eine dritte Düsenaustrittseinheit vorgesehen ist, welche eine den Düsenaustrittsspalt (S) begrenzende starre Hülse oder eine statisch deformierbare Hülse aufweist.

15. Düsenwerkzeugsystem nach einem der Ansprüche 1 bis 14, **dadurch gekennzeichnet, dass** genau ein Stellantrieb (3) vorgesehen ist, welcher für eine symmetrische Deformation der deformierbaren Hülse (8) auf einander gegenüberliegende Kraftangriffspunkte wirkt.

16. Düsenwerkzeugsystem nach einem der Ansprüche 1 bis 14, **dadurch gekennzeichnet, dass** genau zwei einander gegenüberliegende Stellantriebe (3) vorgesehen sind.

17. Düsenwerkzeugsystem nach einem der Ansprüche 1 bis 16, **dadurch gekennzeichnet, dass** die zumindest zwei Düsenaustrittseinheiten (2) Identifizierungsmittel aufweisen und anhand der Identifizierungsmittel unterscheidbar sind.

18. Extrusionsblasanordnung mit einem Extrusionskopf und einem Düsenwerkzeugsystem nach einem der Ansprüche 1 bis 17.

19. Extrusionsblasanordnung nach Anspruch 18 mit einem Datenspeicher einer Steuerung, wobei für die erste Düsenaustrittseinheit (2) und die zweite Düsenaustrittseinheit (2) spezifische und zumindest teilweise unterschiedliche Parameter in dem Datenspeicher hinterlegt sind.

## Claims

1. A nozzle tool system for extrusion blow molding with an intermediate module (1) and at least a first nozzle outlet unit (2) and a second nozzle outlet unit (2), wherein said units respectively form an adjustable nozzle outlet gap between a mandrel (9) extending in an axial direction (x) and a deformable sleeve (8), wherein said units can be connected to the intermediate module (1) as replacements for one another and have a first outlet diameter and a different, larger second outlet diameter, and wherein at least one actuating drive (3) for a reversible deformation of the sleeve (8) is arranged on the intermediate module (1) and can be connected to the deformable sleeve (8) by means of a releasable coupling arrangement, **characterized in that** the first nozzle outlet unit (2) delimits a first actuating travel of the actuating drive (3) by means of at least one inner mechanical stop (12a) and the second nozzle outlet unit (2) delimits a second actuating travel of the actuating drive (3), which is greater than the first actuating travel, by means of at least one inner mechanical stop (12a).

2. The nozzle tool system according to claim 1, **characterized in that** the inner mechanical stops (12a) for a pressing actuating movement of the at least one actuating drive (3) are respectively formed by a stopping surface of the respective nozzle outlet unit (2) .

3. The nozzle tool system according to claim 1 or 2, **characterized in that** an outer mechanical stop (12b) is assigned to the intermediate module (1) for a pulling actuating movement.

4. The nozzle tool system according to claim 1 or 2, **characterized in that** an outer mechanical stop (12b) is assigned to the respective nozzle outlet unit (2) for a pulling actuating movement.

5. The nozzle tool system according to one of claims 1 to 4, **characterized in that** the at least one actuating drive (3) has different actuating positions for a center position of the deformable sleeves (8) of the first nozzle outlet unit (2) on the one hand and the second nozzle outlet unit (2) on the other hand.

6. The nozzle tool system according to one of claims 1 to 5 or the preamble of claim 1, **characterized in that** the first nozzle outlet unit (2) and the second nozzle outlet unit (2) extend along the axial direction (x) over the same height referred to the respective nozzle outlet gap.

7. The nozzle tool system according to one of claims 1 to 6 or the preamble of claim 1, **characterized in that** the first nozzle outlet unit (2) and the second nozzle outlet unit (2) respectively have adjusting means for static pre-positioning of the deformable sleeve (8) relative to the intermediate module (1).

8. The nozzle tool system according to claim 7, **characterized in that** the first nozzle outlet unit (2) and the second nozzle outlet unit (2) are adjustable in a plane perpendicular to the axial direction (x) or by means of tilting or by means of pivoting relative to the intermediate module (1).

9. The nozzle tool system according to claim 7 or 8, **characterized in that** the at least one actuating drive (3) is arranged so as to be movable relative to a base body (24) of the intermediate module (1).

10. The nozzle tool system according to claim 9, **characterized in that** the intermediate module (1) comprises a supporting ring (23) that is movable relative to the base body (24) in a plane perpendicular to the axial direction (x), wherein said supporting ring carries the at least one actuating drive (3).

11. The nozzle tool system according to one of claims 1 to 10, **characterized in that** the mandrel (9) and/or the deformable sleeve (8) are movable along the axial direction (x) by means of actuating movements regulated by an electronic control.

12. The nozzle tool system according to claim 11, **characterized in that** the mandrel (9) of the first nozzle outlet unit (2) and the mandrel (9) of the second nozzle outlet unit (2) have a different diameter on a rear guide shaft section (19), wherein an adapter sleeve (20) is provided for equalization.

13. The nozzle tool system according to one of claims 1 to 12, **characterized in that** the deformable sleeve (8) of the first nozzle outlet unit (2) and the deformable sleeve (8) of the second nozzle outlet unit (2) have a different length along the axial direction (x).

14. The nozzle tool system according to one of claims 1 to 13, **characterized in that** a third nozzle outlet unit is provided, wherein the third nozzle outlet unit has a rigid sleeve or a statically deformable sleeve that delimits the nozzle outlet gap (S).

15. The nozzle tool system according to one of claims 1 to 14, **characterized in that** exactly one actuating drive (3) is provided, wherein said actuating drive acts upon force application points that lie opposite of one another in order to realize a symmetric deformation of the deformable sleeve (8).

16. The nozzle tool system according to one of claims 1 to 14, **characterized in that** exactly two actuating drives (3), which lie opposite of one another, are provided.

17. The nozzle tool system according to one of claims 1 to 16, **characterized in that** the at least two nozzle outlet units (2) have identification means and can be differentiated based on the identification means.

18. An extrusion blow molding arrangement with an extrusion head and a nozzle tool system according to one of claims 1 to 17.

19. The extrusion blow molding arrangement according to claim 18 with a data memory of a control, wherein specific and at least partially different parameters are stored in the data memory for the first nozzle outlet unit (2) and the second nozzle outlet unit (2).

## Revendications

1. Système d'outil à filière, destiné à l'extrusion soufflage, pourvu d'un module intermédiaire (1) et d'au moins une première unité de sortie (2) de filière et d'une deuxième unité de sortie (2) de filière, lesquelles forment chacune entre un mandrin (9) s'étendant dans une direction axiale (x) et une douille (8) déformable une fente ajustable de sortie de filière, lesquelles sont susceptibles d'être raccordées de manière interchangeable entre elles sur le module intermédiaire (1) et lesquelles présentent un premier diamètre de sortie et un deuxième diamètre de sortie plus grand, différents l'un de l'autre, pour une déformation réversible de la douille (8), au moins un actionneur (3) étant placé sur le module intermédiaire (1) et étant susceptible de se raccorder sur la douille (8) déformable par l'intermédiaire d'un ensemble d'accouplement amovible, **caractérisé en ce que** l'unité de sortie (2) de filière délimite par au moins une butée (12a) mécanique interne une première course de réglage de l'actionneur (3) et la deuxième unité de sortie (2) de filière délimite par au moins une butée (12a) mécanique interne une deuxième course de réglage de l'actionneur (3), plus importante par rapport à la première course de réglage.

2. Système d'outil à filière selon la revendication 1, **caractérisé en ce que** pour des déplacements de réglage par poussée de l'au moins un actionneur (3), les butées (12a) mécaniques internes sont constituées chacune par la surface de butée de l'unité de sortie (2) de filière respective.

3. Système d'outil à filière selon la revendication 1 ou 2, **caractérisé en ce que** pour un déplacement de réglage par traction, une butée (12b) mécanique externe est associée au module intermédiaire (1).

4. Système d'outil à filière selon la revendication 1 ou 2, **caractérisé en ce que** pour un déplacement de réglage par traction, une butée (12b) mécanique externe est associée à l'unité de sortie (2) de filière respective.

5. Système d'outil à filière selon l'une quelconque des revendications 1 à 4, **caractérisé en ce que** l'au moins un actionneur (3) comporte différentes positions de réglage pour une position centrale des douilles (8) déformables de la première unité de sortie (2) de filière d'une part et de la deuxième unité de sortie (2) de filière d'autre part.

6. Système d'outil à filière selon l'une quelconque des revendications 1 à 5 ou selon la préambule de la revendication 1, **caractérisé en ce que** la première unité de sortie (2) de filière et la deuxième unité de sortie (2) de filière s'étendent le long de la direction axiale (x) sur la même hauteur, en rapport à la fente de sortie de filière respective.

7. Système d'outil à filière selon l'une quelconque des revendications 1 à 6 ou selon la préambule de la revendication 1, **caractérisé en ce que** la première unité de sortie (2) de filière et la deuxième unité de sortie (2) de filière comportent chacune des moyens d'ajustage pour un premier prépositionnement de la douille (8) déformable par rapport au module intermédiaire (1).

8. Système d'outil à filière selon la revendication 7, **caractérisé en ce que** la première unité de sortie (2) de filière et la deuxième unité de sortie (2) de filière sont ajustables dans un plan perpendiculaire à la direction axiale (x) ou par un basculement ou par un pivotement par rapport au module intermédiaire (1).

9. Système d'outil à filière selon la revendication 7 ou 8, **caractérisé en ce que** l'au moins un actionneur (3) est placé de manière mobile par rapport à un corps de base (24) du module intermédiaire (1).

10. Système d'outil à filière selon la revendication 9, **caractérisé en ce que** le module intermédiaire (1) comprend une bague de support (23) mobile par rapport au corps de base (24), dans un plan à la perpendiculaire de la direction axiale (x), laquelle porte l'au moins un actionneur (3).

11. Système d'outil à filière selon l'une quelconque des revendications 1 à 10, **caractérisé en ce que** le mandrin (9) et / ou la douille (8) déformable sont mobiles le long de la direction axiale (x) par des déplacements de réglage régulés par un système de commande électronique.

12. Système d'outil à filière selon la revendication 11, **caractérisé en ce que** le mandrin (9) de la première unité de sortie (2) de filière et le mandrin (9) de la deuxième unité de sortie (2) de filière présentent un diamètre différent sur une section de tige de guidage (19) en face arrière, une douille d'adaptation (20) étant prévue pour une compensation.

13. Système d'outil à filière selon l'une quelconque des revendications 1 à 12 **caractérisé en ce que** la douille (8) déformable de la première unité de sortie (2) de filière et la douille (8) déformable de la deuxième unité de sortie (2) de filière présentent une longueur différente le long de la direction axiale (x).

14. Système d'outil à filière selon l'une quelconque des revendications 1 à 13, **caractérisé en ce qu'**il est prévu une troisième unité de sortie de filière, laquelle comporte une douille rigide ou une douille statiquement déformable délimitant une fente de sortie de filière (S).

15. Système d'outil à filière selon l'une quelconque des revendications 1 à 14, **caractérisé en ce qu'**il est prévu exactement un actionneur (3), lequel pour une déformation symétrique de la douille (8) déformable, agit sur des points d'attaque de la force mutuellement opposés.

16. Système d'outil à filière selon l'une quelconque des revendications 1 à 14, **caractérisé en ce qu'**exactement deux actionneurs (3) mutuellement opposés sont prévus.

17. Système d'outil à filière selon l'une quelconque des revendications 1 à 16, **caractérisé en ce que** les au moins deux unités de sortie (2) de filière comportent des moyens d'identification et sont distinguables à l'aide des moyens d'identification.

18. Ensemble d'extrusion soufflage, pourvu d'une tête d'extrusion et d'un système d'outil à filière selon l'une quelconque des revendications 1 à 17.

19. Ensemble d'extrusion soufflage selon la revendication 18, pourvu d'une mémoire de données d'un système de commande, pour la première unité de sortie (2) de filière et la deuxième unité de sortie (2) de filière, des paramètres spécifiques et au moins en partie différents étant sauvegardés dans la mémoire de données.
